(19)

**Europäisches Patentamt**

**European Patent Office**

**Office européen des brevets**

(11) **EP 4 549 387 A1**

(12) **EUROPEAN PATENT APPLICATION**

(43) Date of publication:
07.05.2025 Bulletin 2025/19

(21) Application number: 24197508.5

(22) Date of filing: 30.08.2024

(51) International Patent Classification (IPC):
*C01D 15/00* (2006.01) *H01M 10/0562* (2010.01)

(52) Cooperative Patent Classification (CPC):
**C01D 15/00; H01M 4/62; H01M 10/052;**
**H01M 10/0562;** C01P 2002/52; C01P 2002/54;
H01M 2300/0068; H01M 2300/008

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 31.10.2023 KR 20230147306

(71) Applicant: ECOPRO BM CO., LTD.
Cheongju-si, Chungcheongbuk-do 28117 (KR)

(72) Inventors:
- YANG, A Reum
  28116 Cheongju-si, Chungcheongbuk-do (KR)
- JUNG, Hyunsu
  28116 Cheongju-si, Chungcheongbuk-do (KR)
- JUNG, Hayoung
  28116 Cheongju-si, Chungcheongbuk-do (KR)
- JUNG, Sehun
  28116 Cheongju-si, Chungcheongbuk-do (KR)

(74) Representative: Beck & Rössig
European Patent Attorneys
Denninger Str. 169
81925 München (DE)

(54) **SOLID ELECTROLYTE FOR SECONDARY BATTERY AND METHOD OF MANUFACTURING THE SAME**

(57) One embodiment of the present invention provides a solid electrolyte which has an argyrodite crystal structure and contains lithium, phosphorus, sulfur, element M, oxygen, and halogen elements, wherein the element M is at least one selected from an element (M2) with an oxidation number of 2+ and an element (M6) with an oxidation number of 6+, a substitution rate DS1 (%) of the element M represented by Relational Formula 1 is 0.1 to 1%, and a substitution rate DS2 (%) of the oxygen represented by Relational Formula 2 is 0.15% to 2%.

**Description**

BACKGROUND

**1. Field of the Invention**

The present invention relates to a solid electrolyte for a secondary battery and a method of manufacturing the same.

**2. Discussion of Related Art**

Since lithium ion secondary batteries currently on the market use liquid electrolytes containing flammable organic solvents, there is a possibility of overheating and fires in the event of a short circuit. In this regard, all-solid-state batteries using solid electrolytes instead of liquid electrolytes are being studied.

Unlike liquid electrolytes composed of organic substances, solid electrolytes can act as a separator themselves, allowing the existing separator to be removed. In addition, there is no risk of side reactions due to temperature changes or leakage due to external impacts. Accordingly, since there is no liquid electrolyte and separator, the proportion of active materials that increase energy density may be increased, making it possible to implement a high-density battery.

Solid electrolytes may be broadly divided into three types: sulfide-based, oxide-based, and polymer-based. Double sulfide-based electrolytes are characterized by high lithium ionic conductivity because they can form a wide interface between the electrode and the electrolyte.

However, since the chemical stability of sulfide-based solid electrolytes is relatively lower than that of oxide-based solid electrolytes, an improvement in stability is required. Specifically, sulfide-based solid electrolytes are prone to react with moisture in the air or moisture introduced during the process due to various factors such as residual $Li_2S$ or $P_2S_7$ crosslinking sulfur included in the structure. For this reason, there are problems in the manufacturing process, such as a decrease in ionic conductivity due to the generation of hydrogen sulfide gas due to reaction with moisture.

SUMMARY OF THE INVENTION

The present invention is directed to synthesizing a solid electrolyte with a new composition while maintaining an argyrodite crystal structure by containing the element M and oxygen in a conventional solid electrolyte of Li-P-S-X (X=Cl, Br or I) with an argyrodite crystal structure, so the element M can replace some of the Li site, some of the P site, or both, and oxygen can replace some of the S site.

In addition, the present invention is directed to providing a sulfide-based solid electrolyte that may suppress the decrease in ionic conductivity due to doping and improve ionic conductivity maintenance rate (atmospheric stability) by simultaneously containing (doping) at least one element M selected from an element (M2) with an oxidation number of 2+ and an element (M6) with an oxidation number of 6+ and oxygen into an existing sulfide-based solid electrolyte.

In addition, the present invention is directed to providing a sulfide-based solid electrolyte with improved ionic conductivity and improved atmospheric stability by containing a dopant at a specific substitution rate.

One embodiment of the present invention provides a solid electrolyte which has an argyrodite crystal structure and contains lithium, phosphorus, sulfur, element M, oxygen, and halogen elements, wherein the element M is at least one selected from an element (M2) with an oxidation number of 2+ and an element (M6) with an oxidation number of 6+, a substitution rate DS1 (%) of the element M represented by Relational Formula 1 is 0.1 to 1%, and a substitution rate DS2 (%) of the oxygen represented by Relational Formula 2 is 0.15% to 2%.

$$[\text{Relational Formula 1}]$$

$$DS1(\%) = [M]/([Li]+[P]+2*[M])\times100$$

$$[\text{Relational Formula 2}]$$

$$DS2(\%) = [O]/([S]+[O])\times100$$

in Relational Formulas 1 and 2, [Li], [P], [M], [O], and [S] are the content proportions based on the number of atoms of lithium, phosphorus, element M, oxygen, and sulfur, respectively.

The element M may be strontium (M2), tungsten (M6), or a combination thereof.

The solid electrolyte may have a substitution rate DS1-1 (%) of the element M2 represented by the following Relational Formula 1-1 of 0.1 to 1%.

[Relational Formula 1-1]

$$DS1\text{-}1(\%) = [M2]/([Li]+2*[M2])\times 100$$

in Relational Formula 1-1, [Li] and [M2] are the content proportions based on the number of atoms of lithium and element M2, respectively.

The solid electrolyte may have a substitution rate DS1-2 (%) of the element M6 represented by the following Relational Formula 1-2 of 0.1 to 1%.

[Relational Formula 1-2]

$$DS1\text{-}2(\%) = [M6]/([Li]+[P]+2*[M6])\times 100$$

in Relational Formula 1-2, [Li], [P], and [M6] are the content proportions based on the number of atoms of lithium, phosphorus, and element M6, respectively.

Another embodiment of the present invention provides a solid electrolyte which has an argyrodite crystal structure and contains lithium, phosphorus, sulfur, element M, oxygen, and halogen elements, wherein the element M is at least one selected from an element (M2) with an oxidation number of 2+ and an element (M6) with an oxidation number of 6+, and the solid electrolyte is represented by the following Chemical Formulas 1, 2, or 3.

[Chemical Formula 1]  $Li_{7-2a-c}(M2)_aPS_{6-b-c}O_bX_c$

[Chemical Formula 2]  $Li_{7-a-c}(M6)_aP_{1-a}S_{6-b-c}O_bX_c$

[Chemical Formula 3]  $Li_{7-a1-a2-c}(M2)_{a1}(M6)_{a2}P_{1-a2}S_{6-b-c}O_bX_c$

in Chemical Formulas 1, 2, and 3, X is chlorine, bromine, or iodine, and $0.005\leq a\leq 0.05$, $0.005\leq a1+a2\leq 0.05$, $0.005<b<0.1$, and $1<c<2$ are satisfied.

The element M may be strontium (M2), tungsten (M6), or a combination thereof.

The solid electrolyte may have an ionic conductivity of 4.0 mS/cm or more at 25 °C.

The solid electrolyte may have an ionic conductivity maintenance rate (%) of 70% or more, represented by the following Relational Formula 3, after 2 days under dry conditions in an air atmosphere with a dew point of less than -60 °C.

Ionic conductivity maintenance rate (%) = (ionic conductivity of solid electrolyte after 2 days / ionic conductivity of solid electrolyte after initial synthesis) × 100          [Relational Formula 3]

Still another embodiment of the present invention provides a method of preparing the above-described solid electrolyte, including mixing precursors containing lithium, phosphorus, sulfur, and elements M and O; and sintering the mixture.

The precursors containing lithium, phosphorus, sulfur, and elements M and O may include at least one selected from $WO_3$, BaO, and SrO.

The sintering process may be performed at a temperature of 400 to 600 °C for 1 to 16 hours in an active atmosphere.

Yet another embodiment of the present invention provides a lithium secondary battery including the solid electrolyte.

DETAILED DESCRIPTION OF EXEMPLARY EMBODIMENTS

Advantages and features of the present invention and methods of achieving the same should become clear from embodiments described in detail below with reference to the accompanying drawings. However, the present invention is not limited to the embodiments disclosed below, but may be embodied in various different forms, the embodiments merely serve to complete the disclosure of the present invention and to fully inform the scope of the invention to those skilled in the art to which the invention pertains, and the present invention is defined only by the scope of the claims.

Unless otherwise defined, all terms (including technical and scientific terms) used in the present specification may be used with meanings commonly understood by those of ordinary skill in the art to which the present invention belongs. Throughout the specification, when a part is said to "include" a component, this means that the part may further include other components rather than excluding other components unless specifically stated to the contrary. A singular expression also includes a plural expression unless the context clearly indicates otherwise.

One embodiment of the present invention provides a solid electrolyte which has an argyrodite crystal structure and contains lithium, phosphorus, sulfur, element M, oxygen, and halogen elements, wherein the element M is at least one selected from an element (M2) with an oxidation number of 2+ and an element (M6) with an oxidation number of 6+.

In the solid electrolyte of the present invention, the ionic conductivity and ionic conductivity maintenance rate may be improved. The solid electrolyte is characterized by containing elements M and oxygen at a specific substitution ratio in a conventional solid electrolyte containing lithium, phosphorus, sulfur, and halogen elements. The element M is at least one selected from an element (M2) with an oxidation number of 2+ and an element (M6) with an oxidation number of 6+, and specifically, the element (M2) with an oxidation number of 2+ may be Sr, and the element (M6) with an oxidation number of 6+ may be W.

When a conventional solid electrolyte of Li-P-S-X with an argyrodite crystal structure contains element M and oxygen, the element M can replace some of the Li site, some of the P site, or both, and oxygen can replace some of the S site, making it possible to synthesize a solid electrolyte with a new composition while maintaining the argyrodite crystal structure. When the element M is an element (M2) with an oxidation number of 2+ or Sr, one element M2 (Sr) replaces two Li (oxidation number 1+), when the element M is an element (M6) with an oxidation number of 6+ or W, one element M6 (W) replaces one Li (oxidation number 1+) and one P (oxidation number 5+). In addition, in the case of oxygen, one oxygen (oxidation number 2-) replaces one S (oxidation number 2-).

When some of lithium and phosphorus are substituted with the element M, according to the hard soft acid base (HSAB) theory, the weak acid M combines strongly with the weak base S (oxidation number 2-) to form an M-S bond, which can suppress the $H_2O$ reaction in the atmosphere and improve atmospheric stability.

Meanwhile, when only oxygen is doped, the ionic conductivity maintenance rate may be greatly improved, but the ionic conductivity may rapidly deteriorate, and when only the M element is doped, the desired effect is not achieved, making product application difficult.

In addition, the azyrodite crystal structure is face centered cubic (FCC) and is included in the space group F-43m. This crystal structure may be confirmed by X-ray diffraction analysis, and there is no particular limitation when applying known X-ray diffraction analysis.

Provided is a solid electrolyte in which a substitution rate DS1 (%) of the element M represented by the following Relational Formula 1 is 0.1 to 1%, and a substitution rate DS2 (%) of the oxygen represented by the following Relational Formula 2 is 0.15% to 2%:

[Relational Formula 1]

$$DS1(\%) = [M]/([Li]+[P]+2*[M])\times100$$

[Relational Formula 2]

$$DS2(\%) = [O]/([S]+[O])\times100$$

in Relational Formulas 1 and 2, [Li], [P], [M], [O], and [S] are the content proportions (atomic %) based on the number of atoms of lithium, phosphorus, element M, oxygen, and sulfur, respectively.

DS1 may be 0.1 to 1%, for example, 0.1 to 0.5%, preferably 0.2 to 0.4%. When the DS1 value is less than 0.1%, the improvement in ionic conductivity is minimal, and conversely, when it exceeds 1%, ionic conductivity may be low and the ionic conductivity maintenance rate may deteriorate.

DS2 may be 0.15 to 2%, for example, 0.15 to 1%, 0.15 to 0.7%, 0.5 to 2%, 1.3 to 2%, preferably 0.2 to 0.7% or 0.6 to 1.5%. When the DS2 value is less than 0.15%, the effect of improving the ionic conductivity maintenance rate is minimal, and conversely, when it exceeds 2%, ionic conductivity may be low and the ionic conductivity maintenance rate may deteriorate.

Meanwhile, DS1 refers to the ratio (%) based on the number of atoms substituted with an M element in the Li site and P site, and DS2 refers to the ratio (%) based on the number of atoms substituted with an O element in the S site. When some of lithium and phosphorus are substituted with an M element and some of sulfur is substituted with oxygen, the ionic conductivity and ionic conductivity maintenance rate may be improved simultaneously.

In the present invention, M and oxygen may be simultaneously substituted by applying an M-O doping precursor in the solid electrolyte manufacturing process. The relationship and numerical range of DS1 and DS2 values may be determined depending on the element ratio of the M element and the O element in the precursor raw material. For example, the M-O doping precursor may be $WO_3$, BaO, SrO, $Ta_2O_5$, etc.

The solid electrolyte of the present invention may have a substitution rate DS1-1 (%) of the element M2 of 0.1 to 1%, for example, 0.1 to 0.6%, preferably 0.25 to 0.45% as expressed in the following Relational Formula 1-1. In addition, a substitution rate DS1-2 (%) of the element M6, represented by the following Relational Formula 1-2, may be 0.1 to 1%, for example, 0.1 to 0.5%, preferably 0.2 to 0.4%.

$$\text{[Relational Formula 1-1]}$$

$$DS1\text{-}1(\%) = [M2]/([Li]+2*[M2])\times100$$

$$\text{[Relational Formula 1-2]}$$

$$DS1\text{-}2(\%) = [M6]/([Li]+[P]+2*[M6])\times100$$

When the DS1-1 value is less than 0.1%, the improvement in ionic conductivity is minimal, and conversely, when it exceeds 1%, ionic conductivity may be low and the ionic conductivity maintenance rate may deteriorate. In addition, when the DS1-2 value is less than 0.1%, the improvement in ionic conductivity is minimal, and conversely, when it exceeds 1%, ionic conductivity may be low and the ionic conductivity maintenance rate may deteriorate.

Meanwhile, DS1-1 refers to the ratio (%) based on the number of atoms substituted with the M2 element in the Li site, and DS1-2 refers to the ratio (%) based on the number of atoms substituted with the M6 element in the Li site and P site. In the case of metals (M2+) with an oxidation number of 2+, such as Sr, some of the lithium is substituted with the M2 element, and in the case of metals (M6+) with an oxidation number of 6+, such as W, some of the lithium and phosphorus are simultaneously substituted with the M6 element.

The solid electrolyte of the present invention may have an argyrodite crystal structure and contain lithium, phosphorus, sulfur, element M, oxygen, and halogen elements, wherein the element M is at least one selected from an element (M2) with an oxidation number of 2+ and an element (M6) with an oxidation number of 6+, and the solid electrolyte is represented by the following Chemical Formulas 1, 2, or 3.

[Chemical Formula 1] $\quad Li_{7-2a-c}(M2)_aPS_{6-b-c}O_bX_c$

[Chemical Formula 2] $\quad Li_{7-a-c}(M6)_aP_{1-a}S_{6-b-c}O_bX_c$

[Chemical Formula 3] $\quad Li_{7-a1-a2-c}(M2)_{a1}(M6)_{a2}P_{1-a2}S_{6-b-c}O_bX_c$

In Chemical Formulas 1, 2, and 3, X is chlorine, bromine, or iodine, and $0.005 \leq a \leq 0.05$, $0.005 \leq a1+a2 \leq 0.05$, $0.005 < b < 0.1$, and $1 < c < 2$ are satisfied.

In Chemical Formulas 1 to 3, M2 is an element with an oxidation number of 2+, and M6 is an element with an oxidation number of 6+. For example, the element M2 may be Sr, and M6 may be W.

In addition, in Chemical Formulas 1 to 3, when the element M is an element (M2) with an oxidation number of 2+ or Sr, one element M2 (Sr) replaces two Li (oxidation number 1+), when the element M is an element (M6) with an oxidation number of 6+ or W, one element M6 (W) replaces one Li (oxidation number 1+) and one P (oxidation number 5+). In addition, in the case of oxygen, one oxygen (oxidation number 2-) replaces one S (oxidation number 2-).

In addition, X may be chlorine, bromine, or iodine as a halogen element, and is preferably chlorine. Halogen elements may improve ionic conductivity by replacing some of the S site and securing a new path for lithium ions in the crystal lattice.

The solid electrolyte may satisfy $0.005 \leq a \leq 0.05$, $0.005 \leq a1+a2 \leq 0.05$, $0.005 \leq b \leq 0.1$, and $1 < c < 2$, specifically, $0.009 \leq a \leq 0.05$, $0.01 \leq a \leq 0.05$, $0.01 \leq a \leq 0.03$, $0.02 \leq a \leq 0.04$, $0.009 \leq a1+a2 \leq 0.05$, $0.01 \leq a1+a2 \leq 0.05$, $0.01 \leq a1+a2 \leq 0.03$, $0.02 \leq a1+a2 \leq 0.04$, $0.009 < b < 0.1$, $0.01 < b < 0.1$, $0.01 \leq b \leq 0.09$, $0.01 \leq b \leq 0.05$, $0.01 \leq b \leq 0.03$, $0.02 \leq b \leq 0.04$, $1.2 \leq c \leq 1.8$, and $1.4 \leq c \leq 1.6$, and for example, may have the composition shown in Table 1 below.

[Table 1]

| Composition | Li | mol | 5.5 | 5.5 | 5.5 | 5.49 | 5.48 | 5.47 | 5.48 | 5.46 | 5.44 |
|---|---|---|---|---|---|---|---|---|---|---|---|
| | P | | 0.99 | 0.98 | 0.97 | 0.99 | 0.98 | 0.97 | 1 | 1 | 1 |
| | S | | 4.48 | 4.45 | 4.43 | 4.47 | 4.44 | 4.41 | 4.49 | 4.48 | 4.47 |
| | Cl | | 1.5 | 1.5 | 1.5 | 1.5 | 1.5 | 1.5 | 1.5 | 1.5 | 1.5 |
| | O | | 0.03 | 0.05 | 0.08 | 0.03 | 0.06 | 0.09 | 0.01 | 0.02 | 0.03 |
| | M | | 0.01 | 0.02 | 0.03 | 0.01 | 0.02 | 0.03 | 0.01 | 0.02 | 0.03 |

The solid electrolyte of the present invention may have an ionic conductivity of 4.0 mS/cm or more at 25 °C, for example, after initial synthesis of the solid electrolyte, the ionic conductivity may be 4.1 mS/cm or more or 4.2 mS/cm or more, and the upper limit is not particularly limited, but may be, for example, 10 mS/cm or less, 7 mS/cm or less, 5 mS/cm or less, or 4.5 mS/cm or less.

In addition, the solid electrolyte may have an ionic conductivity maintenance rate (%) of 70% or more, for example, 75% or more, 78% or more, or 80 % or more, represented by the following Relational Formula 3, after 2 days under dry conditions in an air atmosphere with a dew point of less than -60 °C, and the upper limit is not particularly limited, but may be 95% or less or 90% or less.

Ionic conductivity maintenance rate (%) = (ionic conductivity of solid electrolyte after 2 days / ionic conductivity of solid electrolyte after initial synthesis) $\times$ 100        [Relational Formula 3]

Another embodiment of the present invention provides a method of manufacturing a solid electrolyte. The manufacturing method is not particularly limited, but may include, for example, mixing precursors containing lithium, phosphorus, sulfur, and elements M and O; and sintering the mixture.

The mixing process is not particularly limited as long as it is performed by a mixing method known in the art. For example, a mechanical milling method, a melt quenching method, a liquid phase method, and the like may be applied. For example, in the case of the mechanical milling method, precursors may be obtained by mechanically grinding compounds including Li, P, S, a halogen, and Sr or W and O as raw materials in a predetermined ratio corresponding to the composition of the target solid electrolyte.

The precursors containing lithium, phosphorus, sulfur, elements M and O, and a halogen may include precursors (LiCl, and the like) containing $Li_2S$, $P_2S_5$, $WO_3$, $BaO$, $SrO$, and halogen elements (X=Cl, Br, I).

The sintering process may be performed for 1 to 16 hours at a temperature of 400 to 600 °C in an inert atmosphere, for example, for 2 to 16 hours, 2 to 14 hours, or 2 to 12 hours at a temperature of 450 to 600 °C, 500 to 600 °C, or 530 to 600 °C under an $N_2$ or Ar gas atmosphere. The conditions of the sintering process are not particularly limited as long as the sintering process is performed sufficiently to form the argyrodite crystal structure of the solid electrolyte.

Still another embodiment of the present invention provides a lithium secondary battery including the solid electrolyte.

The lithium secondary battery may include a positive electrode, a negative electrode located opposite the positive electrode, and the solid electrolyte interposed between the positive electrode and the negative electrode.

The positive electrode and negative electrode may be applied without particular limitation as long as they are a known technology used in the technology field of the lithium secondary battery.

In addition, the lithium secondary battery may include a battery container (case) that accommodates an electrode assembly including the positive electrode, the negative electrode, and the solid electrolyte, and a sealing member that seals the battery container.

At this time, depending on the shape of the battery container (case), the lithium secondary battery may be classified into a can-type lithium secondary battery in which the electrode assembly is built into a metal can and a pouch-type lithium secondary battery in which the electrode assembly is built into a pouch made of a sheet such as an aluminum laminate.

Hereinafter, the present invention will be described in detail through examples, but these are intended to illustrate the present invention in more detail, and the scope of the present invention is not limited to the following examples.

**Examples**

(Mixing process)

A lithium precursor $Li_2S$, a phosphorus precursor $P_2S_5$, a chlorine precursor LiCl, and an M-O precursor ($WO_3$, BaO, SrO, and $Ta_2O_5$) were weighed in stoichiometric ratios to obtain the compositions shown in Table 2 below using a high-energy milling method in a dry room (DP -60 °C).

Precursors with the correct stoichiometric ratio were input into a 330 ml $ZrO_2$ jar, $ZrO_2$ 3 mm balls were input in an amount 10 times the amount of raw material, and the jar was fastened.

Milling was performed at 330 rpm for a total of 18 hours using a planetary mill.

(Sintering process)

The mixture prepared in the mixing process was put into an $Al_2O_3$ crucible and then charged into a tube furnace for sintering.

In order to suppress a reaction with gas present inside the tube furnace, sintering was performed with inert $N_2$ gas flowing, at this time, under sintering conditions of 490 °C, a temperature increase rate of 3 °C/min, and a holding time of 12 hours, followed by natural cooling.

**Experimental Example**

(Evaluation Methods)

Ionic conductivity

200 mg of the solid electrolyte powder of each Example and Comparative Example was cold-pressed at 4 tons for 2 minutes using a mold for measuring pressure cells with a diameter of 10 mm to form a pellet type for measuring ionic conductivity, and then AC impedance was measured (applied frequency: 1 MHz to 0.01 Hz).

Ionic conductivity maintenance rate

The ionic conductivity of the solid electrolyte powder of each Example and Comparative Example was analyzed after exposure for 48 hours in a dry room (DP - 60 °C), and the ionic conductivity maintenance rate was calculated using the following calculation formula.

Ionic conductivity maintenance rate (%) = (ionic conductivity after 48 h exposure) / (ionic conductivity after synthesis) $\times$ 100 (%)   [Calculation Formula]

[Table 2]

| | | Composition | | | | Evaluation | |
|---|---|---|---|---|---|---|---|
| | | [Chemical Formula1] $Li_{5.5-2a}(M2)_aPS_{4.5-b}O_bCl_{1.5}$ [Chemical Formula2] $Li_{5.5-a}(M6)_aP_{1-a}S_{4.5-b}O_bCl_{1.5}$ | | | DS1 (M substitution rate) | DS2 (O substitution rate) | Ionic conductivity | Ionic conductivity maintenance rate |
| | | M (oxidation number) | a | b | % | % | mS/cm | % |
| Comp. Ex. 1 | | - | 0 | 0 | 0 | 0 | 4.63 | 73.7 |
| Comp. Ex. 2 | | - | 0 | 0.01 | 0 | 0.22 | 4.02 | 82 |
| Comp. Ex. 3 | | - | 0 | 0.02 | 0 | 0.44 | 3.85 | 82 |
| Comp. Ex. 4 | | - | 0 | 0.03 | 0 | 0.67 | 3.62 | 89.3 |

(continued)

| | | Composition | | DS1 (M substitution rate) | DS2 (O substitution rate) | Evaluation | |
|---|---|---|---|---|---|---|---|
| | | [Chemical Formula1] $Li_{5.5-2a}(M2)_aPS_{4.5-b}O_bCl_{1.5}$ [Chemical Formula2] $Li_{5.5-a}(M6)_aP_{1-a}S_{4.5-b}O_bCl_{1.5}$ | | | | Ionic conductivity | Ionic conductivity maintenance rate |
| | M (oxidation number) | a | b | % | % | mS/cm | % |
| Ex. 1 | Sr(2+) | 0.01 | 0.01 | 0.15 | 0.22 | 4.25 | 80 |
| Ex. 2 | Sr(2+) | 0.02 | 0.02 | 0.31 | 0.44 | 4.29 | 80.8 |
| Ex. 3 | Sr(2+) | 0.03 | 0.03 | 0.46 | 0.67 | 4.19 | 78.4 |
| Comp. Ex. 5 | Sr(2+) | 0.09 | 0.09 | 1.38 | 2.00 | 2.78 | 68.9 |
| Ex. 4 | W(6+) | 0.01 | 0.03 | 0.15 | 0.67 | 4.24 | 80.2 |
| Ex. 5 | W(6+) | 0.02 | 0.06 | 0.31 | 1.33 | 4.2 | 88.3 |
| Ex. 6 | W(6+) | 0.03 | 0.09 | 0.46 | 2.00 | 4.01 | 78 |
| Ex. 7 | Ba(2+) | 0.01 | 0.01 | 0.15 | 0.22 | 3.79 | 80.6 |
| Ex. 8 | Ba(2+) | 0.02 | 0.02 | 0.31 | 0.44 | 3.8 | 79.1 |
| Ex. 9 | Ba(2+) | 0.03 | 0.03 | 0.46 | 0.67 | 3.61 | 79.4 |
| Comp. Ex. 6 | Ba(2+) | 0.09 | 0.09 | 1.38 | 2.00 | 2.46 | 69.6 |
| Comp. Ex. 7 | Ta(5+) | 0.01 | 0.03 | 0.15 | 0.67 | 3.61 | 86.2 |
| Comp. Ex. 8 | Ta(5+) | 0.02 | 0.05 | 0.31 | 1.11 | 3.78 | 60.2 |
| Comp. Ex. 9 | Ta(5+) | 0.03 | 0.08 | 0.46 | 1.78 | 3.8 | 70.2 |
| Comp. Ex.: Comparative Example Ex.: Example | | | | | | | |

Referring to Table 2, it was confirmed that when Sr or W and oxygen were simultaneously doped in Examples 1 to 3 and Examples 4 to 6, the ionic conductivity was maintained at 4 mS/cm or more and the ionic conductivity maintenance rate was improved.

However, when doping the Ba element and oxygen simultaneously in Examples 7 to 9, compared to Sr having the same oxidation number (2+), the ionic conductivity maintenance rate evaluation result is good at the level of 80%, but the improvement effect was not sufficient because the ionic conductivity was low at less than 4 mS/cm.

It was confirmed that when a Sr or Ba substitution rate exceeded 1%, ionic conductivity decreased and the ionic conductivity maintenance rate deteriorated compared to the reference (Comparative Example 1).

On the other hand, in Comparative Examples 2 to 4, when only oxygen was doped, it was confirmed that the ionic conductivity maintenance rate was improved, but the ionic conductivity was relatively low.

In addition, in Comparative Examples 7 to 9, it was confirmed that when Ta (oxidation number 5+) and oxygen were simultaneously doped, both the ionic conductivity and ionic conductivity maintenance rate were lowered.

In addition, in Comparative Examples 5 and 6, even when Sr or Ba elements and oxygen were simultaneously doped, when the Sr or Ba substitution rate exceeded 1% due to excessive doping, the ionic conductivity was low and the ionic conductivity maintenance rate was inferior to that of the reference (Comparative Example 1).

[Advantageous Effects]

The present invention can provide a sulfide-based solid electrolyte with improved ionic conductivity and improved atmospheric stability, and specifically, a solid electrolyte simultaneously having an ionic conductivity of 4.0 mS/cm or more at 25 °C and an improved ionic conductivity maintenance rate (%) of 70% or more after 2 days under dry conditions in an air atmosphere with a dew point of less than -60 °C can be developed.

As described above, although the present invention has been shown and described with respect to specific embodiments, it will be apparent to those skilled in the art that the present invention can be modified and changed in various ways to the extent that it does not depart from the following claims.

**Claims**

1. A solid electrolyte having an argyrodite crystal structure and containing lithium, phosphorus, sulfur, element M, oxygen, and halogen elements, wherein

   the element M is at least one selected from an element (M2) with an oxidation number of 2+ and an element (M6) with an oxidation number of 6+, and
   a substitution rate DS1 (%) of the element M represented by the following Relational Formula 1 is 0.1 to 1%, and a substitution rate DS2 (%) of the oxygen represented by the following Relational Formula 2 is 0.15% to 2%:

   [Relational Formula 1]

   $$DS1(\%) = [M]/([Li]+[P]+2*[M]) \times 100$$

   [Relational Formula 2]

   $$DS2(\%) = [O]/([S]+[O]) \times 100$$

   in Relational Formulas 1 and 2, [Li], [P], [M], [O], and [S] are the content proportions based on the number of atoms of lithium, phosphorus, element M, oxygen, and sulfur, respectively.

2. The solid electrolyte of claim 1, wherein the element M is strontium (M2), tungsten (M6), or a combination thereof.

3. The solid electrolyte of claim 1 or 2, wherein a substitution rate DS1-1 (%) of the element M2 represented by the following Relational Formula 1-1 is 0.1 to 1%:

   [Relational Formula 1-1]

   $$DS1\text{-}1(\%) = [M2]/([Li]+2*[M2]) \times 100$$

   in Relational Formula 1-1, [Li] and [M2] are the content proportions based on the number of atoms of lithium and element M2, respectively.

4. The solid electrolyte of one of claims 1 to 3, wherein a substitution rate DS1-2 (%) of the element M6 represented by the following Relational Formula 1-2 is 0.1 to 1%:

   [Relational Formula 1-2]

   $$DS1\text{-}2(\%) = [M6]/([Li]+[P]+2*[M6]) \times 100$$

   in Relational Formula 1-2, [Li], [P], and [M6] are the content proportions based on the number of atoms of lithium, phosphorus, and element M6, respectively.

5. The solid electrolyte of one of claims 1 to 4, wherein

   the solid electrolyte is represented by one or a combination of electrolytes according to the following Chemical Formulas 1, 2, or 3:

   [Chemical Formula 1]     $Li_{7-2a-c}(M2)_a PS_{6-b-c} O_b X_c$

[Chemical Formula 2]    $Li_{7-a-c}(M6)_aP_{1-a}S_{6-b-c}O_bX_c$

[Chemical Formula 3]    $Li_{7-a1-a2-c}(M2)_{a1}(M6)_{a2}P_{1-a2}S_{6-b-c}O_bX_c$

in Chemical Formulas 1, 2, and 3, X is chlorine, bromine, or iodine, and $0.005 \leq a \leq 0.05$, $0.005 \leq a1+a2 \leq 0.05$, $0.005 < b < 0.1$, and $1 < c < 2$ are satisfied.

6. A solid electrolyte having an argyrodite crystal structure and containing lithium, phosphorus, sulfur, element M, oxygen, and halogen elements, wherein

wherein the element M is at least one selected from an element (M2) with an oxidation number of 2+ and an element (M6) with an oxidation number of 6+,
the solid electrolyte is represented by one or a combination of electrolytes according to the following Chemical Formulas 1, 2, or 3:

[Chemical Formula 1]    $Li_{7-2a-c}(M2)_aPS_{6-b-c}O_bX_c$

[Chemical Formula 2]    $Li_{7-a-c}(M6)_aP_{1-a}S_{6-b-c}O_bX_c$

[Chemical Formula 3]    $Li_{7-a1-a2-c}(M2)_{a1}(M6)_{a2}P_{1-a2}S_{6-b-c}O_bX_c$

in Chemical Formulas 1, 2, and 3, X is chlorine, bromine, or iodine, and $0.005 \leq a \leq 0.05$, $0.005 \leq a1+a2 \leq 0.05$, $0.005 < b < 0.1$, and $1 < c < 2$ are satisfied.

7. The solid electrolyte of claim 6, wherein the element M is strontium (M2), tungsten (M6), or a combination thereof.

8. The solid electrolyte of one of claims 1 to 7, wherein the solid electrolyte has an ionic conductivity of 4.0 mS/cm or more at 25 °C.

9. The solid electrolyte of one of claims 1 to 8, wherein the solid electrolyte has an ionic conductivity maintenance rate (%) of 70% or more, represented by the following Relational Formula 3, after 2 days under dry conditions in an air atmosphere with a dew point of less than -60 °C:

Ionic conductivity maintenance rate (%) = (ionic conductivity of solid electrolyte after 2 days / ionic conductivity of solid electrolyte after initial synthesis) × 100    [Relational Formula 3]

10. A method of manufacturing the solid electrolyte of one of claims 1 to 9 comprising:

mixing precursors containing lithium, phosphorus, sulfur, and elements M and O; and
sintering the mixture.

11. The method of claim 10, wherein the precursors containing lithium, phosphorus, sulfur, and elements M and O include at least one selected from $WO_3$, BaO, and SrO.

12. The method of claim 10 or 11, wherein the sintering is performed at a temperature of 400 to 600 °C for 1 to 16 hours in an active atmosphere.

13. A lithium secondary battery comprising the solid electrolyte of one of claims 1 to 9.

Europäisches
Patentamt

European
Patent Office

Office européen
des brevets

# EUROPEAN SEARCH REPORT

Application Number

EP 24 19 7508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN TING ET AL: "Argyrodite Solid Electrolyte with a Stable Interface and Superior Dendrite Suppression Capability Realized by ZnO Co-Doping", APPLIED MATERIALS & INTERFACES, vol. 11, no. 43, 30 October 2019 (2019-10-30), pages 40808-40816, XP055807493, US ISSN: 1944-8244, DOI: 10.1021/acsami.9b13313 Retrieved from the Internet: URL:https://pubs.acs.org/doi/pdf/10.1021/acsami.9b13313> | 1,3,5,6, 8-10,12, 13 | INV. C01D15/00 H01M10/0562 |
| Y | * Abstract, Sample preparation, Conclusions; figure 1 * | 2,4,7,11 | |
| X | US 2023/327185 A1 (RYU SAEBOM [KR] ET AL) 12 October 2023 (2023-10-12) | 1,3,5,6, 8-10,12, 13 | |
| Y | * paragraph [0062]; claims; examples * | 2,4,7,11 | TECHNICAL FIELDS SEARCHED (IPC) |
| X | US 2021/135280 A1 (LEE SEOKSOO [KR] ET AL) 6 May 2021 (2021-05-06) | 1,3,5,6, 8-10,12, 13 | C01D H01M |
| Y | * claims; examples * | 2,4,7,11 | |
| Y | US 2022/173430 A1 (MATSUDA ATSUNORI [JP] ET AL) 2 June 2022 (2022-06-02) | 2,4,7,11 | |
| A | * example 18 * | 1,3,5,6, 8-10,12, 13 | |
| Y | US 2023/041325 A1 (WANG GUOGUANG [CN] ET AL) 9 February 2023 (2023-02-09) | 2,4,7,11 | |
| A | * examples * | 1,3,5,6, 8-10,12, 13 | |

The present search report has been drawn up for all claims

| Place of search | Date of completion of the search | Examiner |
|---|---|---|
| Munich | 11 March 2025 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 7508

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2025

| Patent document cited in search report | Publication date | Patent family member(s) | | Publication date |
|---|---|---|---|---|
| US 2023327185 A1 | 12-10-2023 | KR | 20220085621 A | 22-06-2022 |
| | | US | 2023327185 A1 | 12-10-2023 |
| | | WO | 2022131705 A1 | 23-06-2022 |
| US 2021135280 A1 | 06-05-2021 | CN | 112777625 A | 11-05-2021 |
| | | EP | 3817117 A1 | 05-05-2021 |
| | | JP | 2021072288 A | 06-05-2021 |
| | | US | 2021135280 A1 | 06-05-2021 |
| US 2022173430 A1 | 02-06-2022 | CN | 113544088 A | 22-10-2021 |
| | | JP | 7548508 B2 | 10-09-2024 |
| | | JP | WO2020184464 A1 | 17-09-2020 |
| | | US | 2022173430 A1 | 02-06-2022 |
| | | WO | 2020184464 A1 | 17-09-2020 |
| US 2023041325 A1 | 09-02-2023 | CN | 111092262 A | 01-05-2020 |
| | | EP | 4084181 A1 | 02-11-2022 |
| | | JP | 7352030 B2 | 27-09-2023 |
| | | JP | 2023509023 A | 06-03-2023 |
| | | KR | 20210136101 A | 16-11-2021 |
| | | US | 2023041325 A1 | 09-02-2023 |
| | | WO | 2021128738 A1 | 01-07-2021 |

EPO FORM P0459

For more details about this annex : see Official Journal of the European Patent Office, No. 12/82